# EUROPEAN PATENT SPECIFICATION

(11) **EP 3 642 482 B1**
(45) Date of publication and mention of the grant of the patent: **16.06.2021**
(21) Application number: 18746093.6
(22) Date of filing: 21.06.2018
(51) Int. Cl.: F03D 80/70, F03D 80/50, F03D 80/60

(54) **METHOD AND SYSTEM FOR FLUSHING A GEAR OIL COOLING CIRCUIT IN A WIND TURBINE**
VERFAHREN UND SYSTEM ZUM SPÜLEN EINER GETRIEBEÖLKÜHLSCHALTUNG IN EINER WINDTURBINE
PROCÉDÉ ET SYSTÈME DE RINÇAGE D'UN CIRCUIT DE REFROIDISSEMENT D'HUILE D'ENGRENAGE DANS UNE ÉOLIENNE

(30) Priority: 22.06.2017 DK PA201770487
(43) Date of publication of application: 29.04.2020
(73) Proprietor: Ocean Team Group A/S, 6700 Esbjerg (DK)
(72) Inventor: THOMSEN, Jens Peder Høg, 6800 Varde (DK)
(74) Representative: Patrade A/S
(86) International application number: PCT/DK2018/050161
(87) International publication number: WO 2018/233792

(56) References cited:
- CN-U- 202 746 561
- US-A- 2 624 354
- US-A- 4 791 890
- US-B2- 7 546 842

## Description

### FIELD OF THE INVENTION

The present invention relates to a method and system for cleaning of the cooling system of gearbox oil in wind turbines.

### BACKGROUND OF THE INVENTION

The oil of the gearbox in certain types of wind turbines is cooled in order to prevent over-heating. As explained in US8869940 by Johnson et al. assigned to General Electric Corp, the cooling circuit comprises a pump that drives the oil through a filter unit to a heat exchanger before it returns to the gearbox. As disclosed in US9163536 by Becker et al. assigned to Siemens AG, periodic change of oil is necessary and can be automated. In order to remove impurities prior to filling new oil into the gearbox, an oil flushing equipment is disclosed in US7456842 by Llorente Gonzalez et al. assigned to Gamesa, in which oils is recirculated through a 3 micron filter system. Such flushing is important, as metal particles lead to increased wear.

As discussed in US5077444 by Sundholm, flushing of hydraulic systems is advantageously carried out with a turbulent flow. For small and very long pipes, for example hydraulic pipes in a ship, US5077444 by Sundholm discloses flushing with a combination of oil and gas in order to provide turbulent flow. This flushing is done for a one time cleaning after manufacturing the pipes and before installation. Under pressure, the combination is filled into the pipe and pressurised to a high pressure, for example 35 or 50 bar, upon which the pressurised oil is forceful released into a tank through a valve.

Such pressure of 35 bar is far too high for heat exchangers as used for gear oil in wind-turbines. Another relevant background art example is known from US2624354. For cleaning the oil cooling system in gearboxes in wind turbines there is still a need for improvement.

### DESCRIPTION / SUMMARY OF THE INVENTION

It is therefore the object of the invention to provide an improvement in the art. Especially, it is an objective to improve the cleaning procedure for the oil cooling circuit in gearboxes of wind turbines. In particular, it is an objective to improve the lifetime of gearboxes in wind turbines. This is achieved with a method of flushing a cooling circuit for gear oil of a gearbox in a wind turbine and corresponding system as disclosed in the following.

The cooling circuit is provided in the wind turbine as a component of the wind turbine, typically in the nacelle of the wind turbine. It comprises a gear oil pump for continuously recirculating gear oil from the gearbox through the cooling circuit and back into the gearbox during standard operation of the wind turbine when it is producing electricity. The cooling circuit comprises a heat exchanger for releasing heat from the gear oil, for example to the environment around the wind turbine.

Typically, the cooling circuit also comprises a filter unit for filtering particles from the gear oil during circulation. The filter unit comprises a housing inside which there is provided a filter medium for filtering particles from the gear oil when it flows through the filter unit.

The method as presented herein comprises a modification of the flow circuit for flow of flushing liquid from the gear box through a flushing circuit and at least part of the cooling circuit. The flushing circuit adds air to the flushing liquid, typically flushing oil with a viscosity lower than gearbox oil, and raises the pressure in the cooling circuit until a predetermined pressure limit, for example in the range of 3-10 bar, optionally 5-10 bar. The pressure rise leads to compression of the air in the flushing liquid. A subsequent forceful release of the pressure in the cooling circuit is provided such that the compressed air expands quickly and creates turbulence in the cooling circuit, which results in cleaning of the inner walls of the cooling circuit.

Typically, the flushing liquid is oil, typically flushing oil, which has a lower viscosity than typical gear oil, although also gear oil can be used in some circuits as flushing liquid. Gear oil, typically, has a viscosity in the range of 250-400 cSt, for example in the order of 320 cSt, and can be sufficiently effective for flushing in certain situations. However, due to is lower viscosity, for example in the range of 15-32 cSt, and corresponding higher tendency for turbulence during flushing, flushing oil is often preferred. Potentially, additives are added to the flushing oil or gear oil, optionally a varnish remover.

In addition to the turbulence, the forceful release creates pressure waves, typically called induced sound waves, in the system that enhances the effect if the turbulence. These pressure waves are gentle enough to prevent damage to the system, especially the heat exchanger, but assist in release of the particles from the walls in the system. The formation of these induced sound waves is assisted by the volume of heat exchanger.

Optionally, for further enhancing the effect of the turbulence and the induced sound wave, the filter medium is removed from the filter unit such that the housing of the filter unit can function as an accumulator of air and oil. In such case, the accumulator acts as a reservoir for additional compressed air as well as a resonance body for induced sound waves, especially low frequency sound waves, both adding to the effect of turbulence and forceful release of particles from the inner walls of the cooling circuit. The filter housing also has a protective function in that its volume dampens peak waves during the forceful release, which reduces the forces on the heat exchanger, thereby minimizing damage to the heat exchanger.

It is pointed out that that the flushing is done at much lower pressure than the proposed 35 or 50 bar in US5077444 by Sundholm, as the heat exchanger would burst at such high pressure. However, despite the much lower pressure, it has surprisingly turned out that a sufficient turbulence can be achieved in the oil cooling system for efficiently removing particles from the walls of the cooling circuit by the turbulence, even particles smaller than 3 microns.

It is emphasized that a 3 micron filter that is disclosed in the above-mentioned patent US7456842 by Gamesa is not optimum. Detailed studies by the inventor have revealed that smaller particles than 3 micron are also increasing wear of the gearbox. However, a system as disclosed in US7456842 is not useful for removing smaller particles from the walls due to the lack of sufficient turbulence. Thus, it would not be sufficient to install a filter with pores smaller than the pores of the 3 micron filter in US7456842

In practical embodiments, the following method is used.

For controlling a forceful release of the pressure, a pressure release valve is connected to the cooling circuit between the heat exchanger and the gear box. The pressure release valve is configured for closing flow of flushing liquid from the cooling circuit into the gearbox when in closed state and for opening for flow of flushing liquid from the cooling circuit into the gearbox when in open state. In the gear box, air is released from the flushing liquid for preventing cavitation when recirculated by the pump.

In some embodiments, the pressure release valve is operated manually, whereas, in other embodiments, the pressure release valve is automated. For example, the pressure release valve switches automatically between the closed and open state in dependence on the pressure in the cooling circuit. It automatically opens or is opened manually when the pressure has risen above a predetermined pressure limit and automatically closes or is manually closed again when the pressure has fallen below a further predetermined pressure limit that is below the first pressure limit.

For example, the pressure release valve opens automatically or is manually opened when the pressure level on the control circuit has increased to above 5 bar and closes automatically or is closed again, when the forceful release has reduced the pressure to below 4 bar.

Further, a flushing circuit, different from the cooling circuit, is provided. The flushing circuit comprises an upstream end and a downstream end and therein between a flushing filter and an air supply, the air supply being provided downstream of the flushing filter. Optionally, also a flushing pump is provided. In this case, the air supply is advantageously provided downstream of the flushing pump in order to prevent cavitation.

By a first pipe, for example flexible pipe, an upstream end of the flushing circuit is pipe-connected to the gearbox or to the cooling circuit upstream of the gear oil pump for receiving flushing liquid, typically flushing oil, from the gearbox into the flushing circuit through the first pipe and the upstream end of the flushing circuit. A downstream end of the flushing circuit is pipe-connected by a second pipe to the cooling circuit at a downstream connection location.

In some embodiments, the gear oil pump is used for pumping the flushing liquid through the flushing circuit and the cooling circuit. In alternative embodiments, the flushing circuit comprises a flushing pump different from the gear oil pump, for pumping the flushing liquid through the flushing circuit and at least part of the cooling circuit and through the pressure release valve.

For example, the downstream location is between the heat exchanger and the gear oil pump, if the latter is upstream of the heat exchanger. If the flushing circuit is provided with a flushing pump in such a configuration, the flushing circuit bypasses the gear oil pump but not the heat exchanger. Optionally, during flushing, the flushing pump is used, and the gear oil pump is not operating in order to be protected against particles during the flushing process.

Flushing liquid, typically flushing oil with a lower viscosity than gear oil, is pumped from the gearbox through the first pipe, the upstream end, through the flushing filter, pass the air supply and through the heat exchange, the downstream end, and the second pipe. While the flushing liquid is passing the air supply, air is added to the flushing liquid in the flushing circuit.

While the pressure release valve is closed, pressure is built up to a predetermined level in the flushing circuit and in the cooling circuit in a controlled way, for example slowly. Upon reaching the predetermined pressure limit, the pressure release valve is opened, causing a forceful release of pressure from the cooling circuit through the pressure release valve, for example back into the gearbox. This causes a forceful release of pressure from the cooling circuit through the pressure release valve, resulting in a turbulent flow in the cooling circuit, which releases even small particles from the inner walls of the cooling circuit.

Optionally, the pressure release valve is operated cyclic a plurality of times for repeatedly building up pressure to the predetermined pressure limit and forcefully releasing the pressure.

In some embodiments, the cooling circuit comprises a filter unit for filtration of gear oil during standard operation of the wind turbine when producing electricity. In such case, it is advantageous to remove filter medium from the filter unit prior to the building up of pressure in the cooling circuit for providing a smooth flow through the filter unit during the forceful release. Also, the empty filter unit acts as an accumulator and potentially also as a resonance body for the induced sound waves during the forceful release. For example, the location for connection of a downstream end of the flushing circuit to the cooling circuit is between the gear oil pump and the filter unit.

During release of the pressure that has been built up in the cooling circuit, the forcefully released mix of flushing liquid and air through the pressure release valve is useful for flushing the gearbox. For example, the pressure release is used for providing a jet of flushing liquid and air, which is used for flushing the interior of the gearbox by varying the direction of the jet towards the inner walls of the gearbox and towards various internal parts of the gearbox. Optionally, an operator in the nacelle manually steers the jet through an opened top-cover of the gearbox to different locations in the gearbox in order to release not only particles but also varnish from the walls and the gear wheels. The efficiency of removing varnish can be increased by adding a varnish remover to the flushing liquid. Optionally, the pressure release valve is manually operated, for example by the same operator that steers the jet.

An exemplary cycle for flushing is 1-2 minutes pressure built up and 10-30 seconds forceful release. An example of the flow is 20-50 liter release within these 10-30 seconds. A number of cycles are typically done, for example 20-60 cycles.

Whereas, typically, the pressure release valve is provided in the nacelle, the components for the flushing circuit are not necessarily provided in or at the nacelle. Instead of lifting the components of the flushing circuit up to the nacelle, where the gearbox and cooling circuit is normally located, the flushing circuit can be located at ground level for onshore wind turbines or at water surface level for offshore wind turbines. It suffices to connect the flushing circuit to the cooling circuit by the first pipe and the second pipe. The pipes are then both extending from the ground level or water surface level to the nacelle, for example in an umbilical. Optionally, additional pipes are contained in the umbilical for drain and refill of gearbox oil.

For example, the first pipe and the second pipe are provided inside a sleeve of an umbilical. Such an umbilical, typically, comprises a lifting connector at one end for lifting of the umbilical by a hoist. One end of the umbilical is then lifted by a hoist, for example the hoist of the wind turbine, up to the nacelle while the other end is connected to the flushing circuit. The first pipe and the second pipe and then connected for performing the flushing. After the flushing, the first pipe and the second pipe are disconnected, and the umbilical is lifted down again by the hoist.

The gear oil is advantageously drained through the umbilical and, after the flushing, clean gear oil is refilled into the gear box through the umbilical.

Optionally, the method comprises checking, for a predetermined pressure limit, whether forceful release of pressure induces sound waves in the cooling circuit for enhanced turbulent flow, and if the sound waves are not induced to a sufficient level, the pressure limit is increased until satisfactory sound waves are induced.

Typically, the predetermined pressure limit is selected within the range of 3-10 bar. This depends on the ability of the system to withstand pressure without damage. Especially, the components, for example the heat exchanger, should not be at risk for damage due to the pressure.

As mentioned, the flushing system is typically not part of the wind turbine. An example of such flushing system for flushing a cooling circuit of a gearbox in a wind turbine is explained in the following.

In this example, the system comprises a pressure regulation flushing manifold for insertion into the cooling circuit between the gearbox and a heat exchanger of a gear oil cooling circuit. A pressure release valve is pipe-connected to the pressure regulation flushing manifold for receiving flushing liquid, for example flushing oil, therefrom and configured for closing for flow of the flushing liquid from the manifold when in closed state and for opening for flow of the flushing liquid when the pressure rises above a predetermined pressure limit.

For example, the pressure release valve is configured for automatically switching between the closed and open state in dependence of the pressure in the cooling circuit such that it opens when above a predetermined pressure limit. Alternatively, it is configured for manual operation.

Optionally, also a safety valve is provided for releasing the flushing liquid from the pressure regulation flushing manifold automatically when the pressure of the flushing liquid in the pressure regulation flushing manifold reaches a safety pressure limit, wherein the safety pressure limit is higher than or equal to the predetermined pressure limit. The release through the safety valve is not forceful but only drains sufficient flushing liquid from the cooling circuit to keep the pressure from rising above the safety pressure limit. The safety pressure limit is the maximum pressure that can be built up in the cooling circuit and, therefore, higher than or equal to the predetermined pressure limit.

Optionally, the safety valve is used to fill air and flushing liquid into the cooling circuit prior to opening the pressure release valve, for example manually.

The system further comprises a flushing circuit, which is different from the cooling circuit. The flushing circuit comprises an upstream end and a downstream end with a flushing connection manifold for connection to the cooling circuit. Between the downstream end and the upstream end, a flushing filter is provided as well as an air supply for adding air to the flushing liquid. For example, the flushing circuit comprises a flushing pump, a flushing filter, and an air supply arranged in series, the air supply being provided downstream of the flushing pump.

The system is configured for receiving flushing liquid, for example flushing oil, through the upstream end into the flushing circuit and for pumping the flushing liquid, for example by the flushing pump, through the flushing filter and pass the air supply, for adding air to the flushing liquid, and for pumping the aerated flushing liquid further through the downstream end and the flushing connection manifold into the cooling circuit as part of the flushing procedure.

The system is further configured for building up pressure to a predetermined pressure level in the flushing circuit and the cooling circuit, when connected, while the pressure release valve is closed, and for forceful release of pressure through the pressure release valve upon reaching this predetermined pressure limit at the pressure release valve by opening the pressure release valve and for causing a turbulent flow in the cooling circuit during the forceful release.

In case that the flushing circuit is provided at land or sea level, the system optionally comprises an umbilical with a first pipe and second pipe of a length sufficiently long for extending from ground level or sea level to the nacelle of the wind turbine. The flushing, and optionally the gear oil change, is performed through the umbilical.

Optionally, for winding up and unwinding the umbilical at ground or sea level, a reel system is provided. If the reel system is provided on a vessel at sea, an automatic wave compensator is advantageously incorporated. An example is disclosed in WO2014/169918 by Ocean Team.

The pressure release valve is potentially electronically connected to a pressure meter. Alternatively, the pressure release valve has a purely mechanical pressure level adjustment. As a further alternative, already mentioned above, the pressure release valve is operated manually by an operating person in the nacelle. In the latter case, the valve is advantageously used as for directing a high pressure beam of oil into the gear box for cleaning the gearbox interior.

Typical dimensions are given in the following for the flushing system with the flushing circuit (B):
- inner diameter of the first and second pipe: ¾ inch (19.05 mm)
- length of the first and second pipe: 2-5 m when in the nacelle or 100 m when through umbilical
- pumping capacity of the flushing pump: 15-50 litre/ minute
- filtration capabilities of the flushing filter: 1-3 microns
- pressure range for predetermined pressure limit: 3-10 bar, e.g. 3-10 bar
- number of flushing cycles: 20-50 cycles
- typical period per flushing cycle: 1-5 minutes, e.g. 3 min
- amount of air added per litre flushing liquid: 5-15%, e.g. 10%
- target of Reynolds number by the forceful release of the pressure: >3000

Typical dimensions are given in the following for the cooling circuit (A):
- volume of heat exchanger: 20-50 litre
- diameter of the pipes in the cooling circuit 1-2 inch (25.4 mm - 50.8 mm)
- length of cooling circuit: 5-10 m
- volume of housing of filter unit: 20-40 litre
- total volume of cooling circuit: 40-90 litre
- the filter unit's fraction of volume of the cooling circuit: 20-60%, e.g. 40%
- the heat exchanger's fraction of volume of the cooling circuit: 20-60%, e.g. 40%
- capacity of the cooling pump: 25-40 litre/min
- total volume of gear oil: 300-2500 litre

Although, gear oil is usually used for flushing in the prior art, other flushing liquids with a lower viscosity are advantageously applied in order to easier provide turbulent flow. Typical flushing liquids are oils with a substantially lower viscosity than gear oil, for example a viscosity that is at least a factor of 3 lower, for example a factor of 5 or 10 lower than gear oil. Preferred are flushing oils that are compatible with gear oil.

### SHORT DESCRIPTION OF THE DRAWINGS

The invention will be explained in more detail with reference to the drawing, where
- FIG. 1: illustrates a wind turbine where an umbilical extends from a vessel at the sea level up to the nacelle,
- FIG. 2: is a flushing diagram for the components of the flushing circuit,
- FIG. 3: is a flushing diagram for an alternative embodiment.

### DETAILED DESCRIPTION / PREFERRED EMBODIMENT

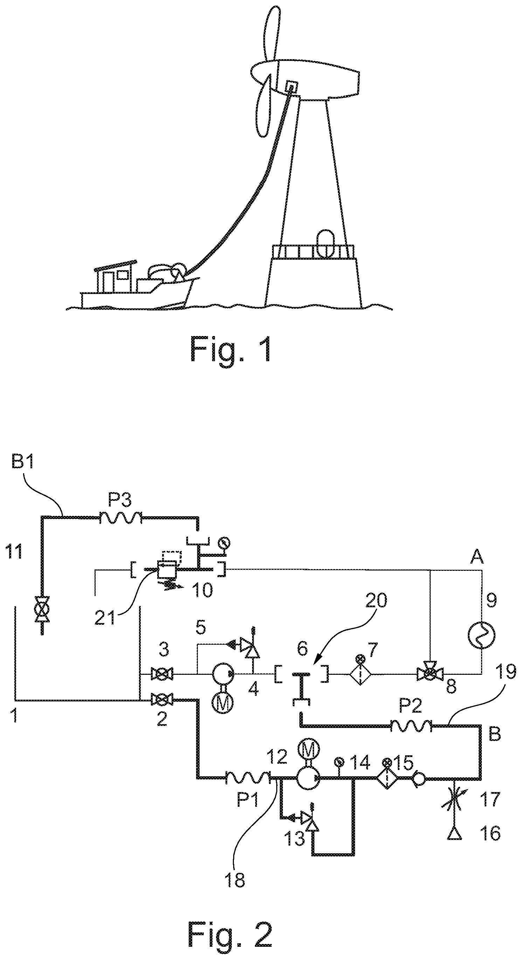

FIG. 1 illustrates an offshore wind turbine where an umbilical extends from a reel system on a vessel at the sea level up to the nacelle,

FIG. 2 discloses a flushing circuit B connected to the oil cooling circuit A of a gearbox 1 in a wind turbine. For example, the flushing circuit B is provided as a device on a vessel as illustrated in FIG. 1 and connected to the cooling circuit by an umbilical. Alternatively, the flushing circuit B is provided on land for an onshore wind turbine and connected to the cooling circuit by an umbilical. As a further alternative, the flushing circuit is lifted up to the nacelle and connected to the cooling circuit inside the nacelle.

The gear oil cooling circuit A comprises an inlet valve 3 that connects the gearbox 1 with a gear oil pump 4 that pumps the gear oil through a filter unit 7 and through a heat exchanger 9, before the gear oil returns to the gear box 1. A three way thermo-valve 8 regulates how much gear oil is cooled by the heat exchanger 9 and how much gear oil is bypassing the heat exchanger 9. A safety return line 5 around the gear oil pump 4 comprises a safety valve and protects the cooling circuit A from overpressure.

An upstream end 18 of the flushing circuit B is connected to a sump valve 2 of the gearbox 1 through a first pipe P1. Alternatively, it could be connected to the cooling circuit A at a location upstream of the gear oil pump 4, such as between inlet valve 3 and the gear oil pump 4.

A flushing pump 12 pumps the flushing liquid, typically flushing oil which has a lower viscosity than gear oil, through a flushing filter 14 and through a flushing connection manifold 6 into the oil cooling circuit A after having injected air from an air source 16 into the flushing liquid through an air regulation valve 17.

A safety return line with a safety valve 13 protects the flushing pump 12 from damage by overpressure.

A pressure regulation flushing manifold 10 is inserted into the cooling circuit A upstream of the gearbox 1 and downstream of the heat exchanger 9. The pressure manifold 10 communicates with a pressure release valve 11 for forceful release of the pressurised flushing liquid in the cooling circuit A in order to create turbulent flushing in the cooling circuit A. The combination B1 of the pressure manifold 10 and the pressure release valve 11 is used for flushing in combination with the flushing circuit B and is not part of the standard cooling circuit A.

In a compression phase, while the pressure release valve 11 is closed, pressure builds up in the flushing circuit B and the cooling circuit A. The maximum pressure that is built up is well below pressure that would cause damage to the heat exchanger 9. Typically, the predetermined pressure limit is in the range of 3-10 bar, optionally 5-10 bar. For example, the predetermined pressure limit is 5 bar.

The pressure manifold 10 comprises a safety valve 21 for automatically releasing the flushing liquid when the pressure of the flushing liquid in the cooling circuit A reaches a safety pressure limit. The release through the safety valve 21 is not forceful but only drains sufficient flushing liquid from the cooling circuit A to keep the pressure from rising above the safety pressure limit. The safety pressure limit is the maximum pressure that can be built up in the cooling circuit (A) and, therefore, higher than or equal to the predetermined pressure limit.

In some embodiments, as explained below in more detail, the pressure release valve 11 is operated manually. If not opened during the compression phase, flushing liquid will drain through the safety valve 21 and prevent damage to the system. This draining is optionally used in the beginning of the flushing procedure in order to fill the cooling circuit A with flushing liquid to which air has been added. For example, flushing liquid is pumped into the cooling circuit, and the pressure relief valve 11 is not opened, which results in the safety valve opening at the maximum pressure, leading to a slow flow of aerated flushing liquid into the cooling circuit.

For flushing, once a predetermined pressure limit has been reached in the oil cooling circuit A, the pressure release valve 11 is opened, manually or automatically, for providing a pressure release phase where the pressure is abruptly and forcefully released through the pressure release valve 11. This abrupt release of the pressure causes not only turbulent flow through the oil cooling circuit A but also causes an induced sound wave back through the cooling circuit A. The induced sound wave is multifrequent and propagating through the system, potentially bouncing back and forth a few times before dying out.

The combination of turbulent flow as well as the induced sound wave has turned out to be an efficient way to cause release of particles from the walls of the cooling circuit A, even particles smaller than 3 microns. The filtrations capabilities of the flushing filter 14 are correspondingly adjusted with respect to size. Optionally, the flushing filter 14 is configured for filtering out particles smaller than 3 microns, for example particles with a size down to 1 micron. However, dependent on the need, the filter has a smallest pore size in the range of 1-6 microns, for example in the range of 1-3 microns.

A non-return valve 15 protects the filter 14 against this induced sound wave and any back pressure.

Under normal filtering conditions, the filter unit 7 comprises a filter housing inside which a filter medium is provided. In order to further improve the efficacy of the system, the filter medium of the filter unit 7 is taken out of the filter housing, such that the filter unit 7 has an empty housing. This results in the filter housing acting as an accumulator of the oil/air mixture, increasing the total volume of the contained oil/air mixture in which pressure is built up during the compression phase. As the compressed gas is driving the oil of the cooling circuit A during the pressure release phase, the larger volume of compressed air from the filter housing increases the flow and enhances the turbulence, which is beneficial for the release of the particles from the inner walls of the oil cooling circuit A. Introduction of air into the flushing liquid is used for simplicity, but other gases may be used instead of air, for example nitrogen gas.

Furthermore, the empty filter housing acts as a resonance body for the induced sound wave, especially at low frequencies, during the pressure release phase, which improves the release of particles from the inner walls of the oil cooling circuit A. Thus, the empty filter housing has a double function, which is increased gas volume as well as enhanced action by induced sound waves.

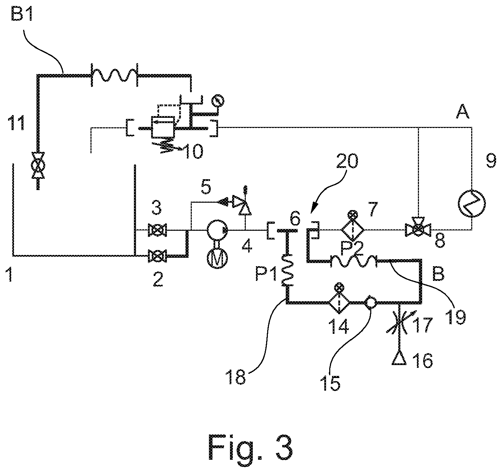

FIG. 3 illustrates an alternative embodiment, in which the cooling pump 4 is used for building pressure in the cooling circuit A and wherein the flushing circuit B between the upstream end 18 and the downstream end 19 comprises the components of a flushing filter 14, non-return valve 15, and air regulation valve 17. In this case, the flushing circuit B is interposed between the downstream side of the cooling pump 4 and the upstream side of the heat exchanger 9. The cooling pump 4 drives the flushing liquid through pipe P1, and through the upstream end 18 into the flushing circuit B with the flushing filter 14, non-return valve 15, air regulation valve 17 for the air inlet, downstream end 19 of the flushing circuit B, and pipe P2, and then back into the cooling circuit A and through the heat exchanger 9.

For the optional case that the cooling circuit A also comprises a filter unit 7, the flushing circuit B is interposed between the cooling pump 4 and the filter unit 7. As explained above, the filter medium thereof is advantageously removed. Similarly to the function of the circuit of FIG. 2, pressure is built up in the cooling circuit A of FIG. 3 until the pressure is forcefully released through pressure release valve 11.

In some embodiments, also valid for the principles of FIG. 2 and 3, the pressure release valve 11 is a manually operated valve. Typically, a person would operate the valve in the nacelle. As the pressurised flushing liquid, typically oil, is forcefully released through the pressure release valve 11, the release can be used to create a jet of flushing liquid, which is then manually directed towards the gear wheels and the walls of the gearbox in order to remove particles and sludge from the walls of the gearbox.

As indicated by the curved lines, pipe P3 is used for the additional connection between the cooling circuit A and the pressure release valve 11. The pipes P1, P2 connect the cooling circuit A with the flushing circuit B.

For example, the flushing circuit B is installed in the nacelle of the wind turbine.

Alternatively, the main components of the flushing circuit B can be connected by long pipes P1, P2, for example through an umbilical. This implies the possibility of keeping the main components, which includes the flushing filter 14 as well as the air regulation valve 17, and optionally also the flushing pump 12, on ground or on a vessel while only lifting the pipes P1, P2 up to the nacelle of the wind turbine.

Typically the pipes P1 and P2 have an inner diameter in the range of half an inch (12.7 mm) one inch (25.4 mm), for example three quarter of an inch (19.05 mm).

Optionally, an umbilical with pipes is used for drain of gear oil from the gearbox and refilling gear oil into the gearbox.

## Claims

1. A method of flushing a cooling circuit (A) for gear oil of a gearbox (1) in a wind turbine, the cooling circuit (A) comprising a gear oil pump (4) and a heat exchanger (9), the cooling circuit (A) being connected to the gearbox (1) and configured for circulating gear oil from the gearbox (1) through the cooling circuit (A) by the gear oil pump (4) during standard operation of the wind turbine when producing electricity; the method comprising
connecting a pressure release valve (11) to the cooling circuit (A) downstream of the heat exchanger (9) between the heat exchanger (9) and the gear box (1), the pressure release valve (11) being configured for closing for flow of flushing liquid, for example flushing oil, from the cooling circuit (A) into the gearbox (1) and for opening for flow of flushing liquid when the pressure in the cooling circuit (A) rises above a predetermined pressure limit;
providing a flushing circuit (B) upstream of the heat exchanger (9) and different from the cooling circuit (A), the flushing circuit (B) comprising an upstream end (18) and a downstream end (19) and therein between a flushing filter (14) and an air supply (16, 17) downstream of the flushing filter (14);
by a first pipe (P1) connecting the upstream end (18) of the flushing circuit (B) to the gearbox (1) or to the cooling circuit (A) upstream of the exchanger (9) for receiving flushing liquid, for example flushing oil, from the gearbox (1) into the flushing circuit (B) through the first pipe (P1) and the upstream end (18);
by a second pipe (P2) connecting a downstream end (19) of the flushing circuit (B) to the cooling circuit (A) at a downstream connection location (20) upstream of the heat exchanger (9);
pumping flushing liquid, for example flushing oil or gear oil, from the gearbox (1) through first pipe (P1), the upstream end (18) and the flushing filter (14), pass the air supply (16, 17) and through the heat exchanger (9), the downstream end and the second pipe (P2), and adding air from the air supply (16, 17) to the flushing liquid in the flushing circuit (B) while the flushing liquid is passing the air supply (16, 17);
while the pressure release valve (11) is closed, building up pressure to a predetermined level in the flushing circuit (B) and in the cooling circuit (A) and, upon reaching this predetermined pressure limit, opening the pressure release valve (11) downstream of the heat exchanger (9) and causing a turbulent flow in the cooling circuit (A) during a forceful release of pressure from the cooling circuit (A) through the pressure release valve (11).

2. A method according to claim 1, wherein the method comprises forcefully releasing the pressure from the cooling circuit (A) through the pressure release valve (11) into the gearbox (1).

3. A method according to claim 2, wherein the method comprises forcefully releasing the pressure from the cooling circuit (A) through the pressure release valve (11) as a jet of flushing liquid and flushing the interior of the gearbox (1) by varying the direction of the jet towards various internal parts of the gearbox (1).

4. A method according to any preceding claim, wherein the method comprises operating the pressure release valve (11) cyclic a plurality of times for repeatedly building up pressure to the predetermined pressure limit and forcefully releasing the pressure.

5. A method according to any preceding claim, wherein the method comprises providing the downstream connection location (20) between the gear oil pump (4) and the heat exchanger (9).

6. A method according to any preceding claim, wherein the cooling circuit (A) comprises a filter unit (7) for filtration of gear oil during standard operation of the wind turbine when producing electricity; wherein the method comprises removing filter medium from the filter unit (7) prior to the building up of pressure in the cooling circuit (A) for providing a smooth flow through the filter unit (7) during the forceful release.

7. A method according to claim 6, wherein the downstream connection location (20) is between the gear oil pump (4) and the filter unit (7).

8. A method according to any preceding claim, wherein the flushing circuit (B) comprises a flushing pump (12) different from the gear oil pump (4), for pumping the flushing liquid through the flushing circuit (B) and at least part of the cooling circuit and through the pressure release valve (11).

9. A method according to claim 8, wherein the downstream connection location (20) is upstream of the heat exchanger (9) between the gear oil pump (4) and the heat exchanger (9) for bypassing the gear oil pump (4) by the flushing circuit (B) but not the heat exchanger (9).

10. A method according to any preceding claim, wherein the method comprises selecting the predetermined pressure limit within the range of 3-10 bar.

11. A method according to any preceding claim, wherein the flushing liquid is oil with a lower viscosity than the gear oil and configured for turbulence during the forceful release of the pressure through the pressure release valve 11.

12. A flushing system for flushing a cooling circuit (A) for gear oil of a gearbox (1) in a wind turbine, the system comprising
- a pressure regulation flushing manifold (10) for insertion into the cooling circuit between the gearbox (1) and a heat exchanger (9) of a gear oil cooling circuit (A);
- a pressure release valve (11) pipe-connected to the pressure regulation flushing manifold (10) for receiving flushing liquid, for example flushing oil, therefrom and configured for closing for flow of the flushing liquid from the manifold (10) and for opening for flow of the flushing liquid when the pressure rises above a predetermined pressure limit;
- a safety valve (21) for releasing the flushing liquid from the manifold (10) automatically when the pressure of the flushing liquid in the manifold (10) reaches a safety pressure limit, wherein the safety pressure limit is higher than or equal to the predetermined pressure limit;
- a flushing circuit (B) different from the cooling circuit (A), the flushing circuit (B) comprising an upstream end (18) and a downstream end (19) with a flushing connection manifold (6) for connection to the cooling circuit (A) upstream of the heat exchanger (9) and, between the downstream end and the upstream end, a flushing pump (12), a flushing filter (14), and an air supply (16, 17) arranged in series, the air supply (16, 17) being provided downstream of the flushing pump (12) for adding air to the flushing liquid;
wherein the system is configured for receiving flushing liquid, for example flushing oil, through the upstream end (18) upstream of the heat exchanger (9) and into the flushing circuit (B) and for pumping the flushing liquid by the flushing pump (12) through the flushing filter (14) and pass the air supply (16, 17), for adding air to the flushing liquid, and for pumping the aerated flushing liquid further through the downstream end and the flushing connection manifold (6) into cooling circuit (A) upstream of the heat exchanger (9) as part of the flushing procedure;
wherein the system is further configured for building up pressure to a predetermined pressure level in the flushing circuit (B) and the cooling circuit (A), when connected, while the pressure release valve (11) is closed, and wherein the system is configured for forceful release of pressure through the pressure release valve (11) upon reaching this predetermined pressure limit at the pressure release valve by opening the pressure release valve (11) downstream of the heat exchanger (9) and for causing a turbulent flow in the cooling circuit (A) during the forceful release.

## Patentansprüche

1. Verfahren zum Spülen eines Kühlkreislaufs (A) für Getriebeöl eines Getriebes (1) in einer Windturbine, wobei der Kühlkreislauf (A) eine Getriebeölpumpe (4) und einen Wärmetauscher (9) umfasst, wobei der Kühlkreislauf (A) mit dem Getriebe (1) verbunden und zum Zirkulieren von Getriebeöl von dem Getriebe (1) durch den Kühlkreislauf (A) durch die Getriebeölpumpe (4) während eines Standardbetriebs der Windturbine konfiguriert ist, wenn Elektrizität erzeugt wird; wobei das Verfahren Folgendes umfasst:
Verbinden eines Druckentlastungsventils (11) mit dem Kühlkreislauf (A) stromabwärts des Wärmetauschers (9) zwischen dem Wärmetauscher (9) und dem Getriebe (1), wobei das Druckentlastungsventil (11) zum Schließen für einen Durchfluss von Spülflüssigkeit, zum Beispiel Spülöl, von dem Kühlkreislauf (A) in das Getriebe (1) und zum Öffnen für einen Durchfluss von Spülflüssigkeit, wenn der Druck in dem Kühlkreislauf (A) über einen vorbestimmten Druckgrenzwert steigt, konfiguriert ist;
Bereitstellen eines Spülkreislaufs (B) stromaufwärts des Wärmetauschers (9) und sich von dem Kühlkreislauf (A) unterscheidend, wobei der Spülkreislauf (B) ein stromaufwärts gelegenes Ende (18) und ein stromabwärts gelegenes Ende (19) und zwischen diesen ein Spülfilter (14) und eine Luftzufuhr (16, 17) stromabwärts des Spülfilters (14) umfasst;
Verbinden des stromaufwärts gelegenen Endes (18) des Spülkreislaufs (B) mit dem Getriebe (1) oder dem Kühlkreislauf (A) stromaufwärts des Tauschers (9) durch ein erstes Rohr (P1), um Spülflüssigkeit, zum Beispiel Spülöl, von dem Getriebe (1) in den Spülkreislauf (B) durch das erste Rohr (P1) und das stromaufwärts gelegene Ende (18) aufzunehmen;
Verbinden eines stromabwärts gelegenen Endes (19) des Spülkreislaufs (B) mit dem Kühlkreislauf (A) durch ein zweites Rohr (P2) an einer stromabwärts gelegenen Verbindungsstelle (20) stromaufwärts des Wärmetauschers (9);
Pumpen von Spülflüssigkeit, zum Beispiel Spülöl oder Getriebeöl, von dem Getriebe (1) durch das erste Rohr (P1), das stromaufwärts gelegene Ende (18) und das Spülfilter (14), an der Luftzufuhr (16, 17) vorbei und durch den Wärmetauscher (9), das stromabwärts gelegene Ende und das zweite Rohr (P2) und Hinzufügen von Luft von der Luftzufuhr (16, 17) zu der Spülflüssigkeit in dem Spülkreislauf (B), während die Spülflüssigkeit die Luftzufuhr (16, 17) passiert;
Aufbauen eines Drucks bis zu einem vorbestimmten Niveau in dem Spülkreislauf (B) und dem Kühlkreislauf (A), während das Druckentlastungsventil (11) geschlossen ist, und bei Erreichen dieses vorbestimmten Druckgrenzwerts Öffnen des Druckentlastungsventils (11) stromabwärts des Wärmetauschers (9) und Bewirken einer turbulenten Strömung in dem Kühlkreislauf (A) während einer starken Druckentlastung aus dem Kühlkreislauf (A) durch das Druckentlastungsventil (11).

2. Verfahren nach Anspruch 1, wobei das Verfahren das starke Entlasten des Drucks aus dem Kühlkreislauf (A) durch das Druckentlastungsventil (11) in das Getriebe (1) umfasst.

3. Verfahren nach Anspruch 2, wobei das Verfahren das starke Entlasten des Drucks aus dem Kühlkreislauf (A) durch das Druckentlastungsventil (11) als ein Strahl von Spülflüssigkeit und Spülen des Inneren des Getriebes (1) durch Variieren der Richtung des Strahls in Richtung verschiedener Innenteile des Getriebes (1) umfasst.

4. Verfahren nach einem der vorstehenden Ansprüche, wobei das Verfahren zyklisches Betreiben des Druckentlastungsventils (11) für eine Vielzahl von Malen für ein wiederholtes Aufbauen von Druck bis zu dem vorbestimmten Druckgrenzwert und das starke Entlasten des Drucks umfasst.

5. Verfahren nach einem der vorstehenden Ansprüche, wobei das Verfahren Bereitstellen der stromabwärts gelegenen Verbindungsstelle (20) zwischen der Getriebeölpumpe (4) und dem Wärmetauscher (9) umfasst.

6. Verfahren nach einem der vorstehenden Ansprüche, wobei der Kühlkreislauf (A) eine Filtereinheit (7) zur Filtrierung von Getriebeöl während des Standardbetriebs der Windturbine umfasst, wenn Elektrizität erzeugt wird; wobei das Verfahren Entfernen von Filtermedium aus der Filtereinheit (7) vor dem Aufbauen von Druck in dem Kühlkreislauf (A) umfasst, um einen gleichmäßigen Durchfluss durch die Filtereinheit (7) während der starken Entlastung bereitzustellen.

7. Verfahren nach Anspruch 6, wobei die stromabwärts gelegene Verbindungsstelle (20) zwischen der Getriebeölpumpe (4) und der Filtereinheit (7) liegt.

8. Verfahren nach einem der vorstehenden Ansprüche, wobei der Spülkreislauf (B) eine Spülpumpe (12), die sich von der Getriebeölpumpe (4) unterscheidet, umfasst, um die Spülflüssigkeit durch den Spülkreislauf (B) und zumindest einen Teil des Kühlkreislaufs und durch das Druckentlastungsventil (11) zu pumpen.

9. Verfahren nach Anspruch 8, wobei die stromabwärts gelegene Verbindungsstelle (20) stromaufwärts von dem Wärmetauscher (9) zwischen der Getriebeölpumpe (4) und dem Wärmetauscher (9) liegt, um die Getriebeölpumpe (4) durch den Spülkreislauf (B), aber nicht den Wärmetauscher (9) zu umgehen.

10. Verfahren nach einem der vorstehenden Ansprüche, wobei das Verfahren Auswählen des vorbestimmten Druckgrenzwerts innerhalb eines Bereichs von 3-10 bar umfasst.

11. Verfahren nach einem der vorstehenden Ansprüche, wobei die Spülflüssigkeit Öl mit einer geringeren Viskosität als das Getriebeöl ist und für eine Turbulenz während der starken Entlastung des Drucks durch das Druckentlastungsventil (11) konfiguriert ist.

12. Spülsystem zum Spülen eines Kühlkreislaufs (A) für Getriebeöl eines Getriebes (1) in einer Windturbine, wobei das System Folgendes umfasst:
- einen Druckregulierungs-Spülverteiler (10) zum Einsetzen in den Kühlkreislauf zwischen dem Getriebe (1) und einem Wärmetauscher (9) eines Getriebeölkühlkreislaufs (A);
- ein Druckentlastungsventil (11), das mittels Rohr mit dem Druckregulierungs-Spülverteiler (10) verbunden ist, um Spülflüssigkeit, zum Beispiel Spülöl, davon aufzunehmen und zum Schließen für einen Durchfluss der Spülflüssigkeit von dem Verteiler (10) und zum Öffnen für einen Durchfluss der Spülflüssigkeit, wenn der Druck über einen vorbestimmten Druckgrenzwert steigt, konfiguriert ist;
- ein Sicherheitsventil (21) zum automatischen Freisetzen der Spülflüssigkeit aus dem Verteiler (10), wenn der Druck der Spülflüssigkeit in dem Verteiler (10) einen Sicherheitsdruckgrenzwert erreicht, wobei der Sicherheitsdruckgrenzwert höher als der vorbestimmte Druckgrenzwert oder gleich diesem ist;
- einen Spülkreislauf (B), der sich von dem Kühlkreislauf (A) unterscheidet, wobei der Spülkreislauf (B) ein stromaufwärts gelegenes Ende (18) und ein stromabwärts gelegenes Ende (19) mit einem Spülverbindungsverteiler (6) zur Verbindung mit dem Kühlkreislauf (A) stromaufwärts des Wärmetauschers (9) und zwischen dem stromabwärts gelegenen Ende und dem stromaufwärts gelegenen Ende eine Spülpumpe (12), ein Spülfilter (14) und eine Luftzufuhr (16, 17), die in Reihe angeordnet sind, umfasst, wobei die Luftzufuhr (16, 17) stromabwärts der Spülpumpe (12) bereitgestellt ist, um Luft zu der Spülflüssigkeit hinzuzufügen; wobei das System konfiguriert ist zum Empfangen von Spülflüssigkeit, zum Beispiel Spülöl, durch das stromaufwärts gelegene Ende (18) stromaufwärts des Wärmetauschers (9) und in den Spülkreislauf (B) und zum Pumpen der Spülflüssigkeit durch die Spülpumpe (12) durch das Spülfilter (14) und an der Luftzufuhr (16, 17) vorbei, um Luft zu der Spülflüssigkeit hinzuzufügen, und zum Pumpen der belüfteten Spülflüssigkeit weiter durch das stromabwärts gelegene Ende und den Spülverbindungsverteiler (6) in den Kühlkreislauf (A) stromaufwärts des Wärmetauschers (9) als Teil des Spülvorgangs; wobei das System ferner konfiguriert ist zum Aufbauen von Druck bis zu einem vorbestimmten Druckniveau in dem Spülkreislauf (B) und dem Kühlkreislauf (A), wenn sie verbunden sind, während das Druckentlastungsventil (11) geschlossen ist, und wobei das System konfiguriert ist für eine starke Entlastung des Drucks durch das Druckentlastungsventil (11), wenn dieser vorbestimmte Druckgrenzwert an dem Druckentlastungsventil erreicht ist, indem das Druckentlastungsventil (11) stromabwärts des Wärmetauschers (9) geöffnet wird, und zum Bewirken einer turbulenten Strömung in dem Kühlkreislauf (A) während der starken Entlastung.

## Revendications

1. Procédé de rinçage d'un circuit de refroidissement (A) pour de l'huile d'engrenage d'une boîte de vitesses (1) dans une éolienne, le circuit de refroidissement (A) comprenant une pompe à huile d'engrenage (4) et un échangeur de chaleur (9), le circuit de refroidissement (A) étant relié à la boîte de vitesses (1) et configuré pour faire circuler de l'huile d'engrenage à partir de la boîte de vitesses (1) à travers le circuit de refroidissement (A) par la pompe à huile d'engrenage (4) pendant le fonctionnement standard de l'éolienne lors de la production d'électricité ; le procédé comprenant
la liaison d'une soupape de libération de pression (11) au circuit de refroidissement (A) en aval de l'échangeur de chaleur (9) entre l'échangeur de chaleur (9) et la boite de vitesses (1), la soupape de libération de pression (11) étant configurée pour se fermer pour un écoulement de liquide de rinçage, par exemple de l'huile de rinçage, à partir du circuit de refroidissement (A) dans la boîte de vitesses (1) et pour s'ouvrir pour un écoulement de liquide de rinçage lorsque la pression dans le circuit de refroidissement (A) s'élève au-dessus d'une limite de pression prédéterminée ;
la fourniture d'un circuit de rinçage (B) en amont de l'échangeur de chaleur (9) et différent du circuit de refroidissement (A), le circuit de rinçage (B) comprenant une extrémité amont (18) et une extrémité aval (19) et à l'intérieur entre un filtre de rinçage (14) et une alimentation en air (16, 17) en aval du filtre de rinçage (14) ;
la liaison, par une première conduite (P1), de l'extrémité amont (18) du circuit de rinçage (B) à la boite de vitesses (1) ou au circuit de refroidissement (A) en amont de l'échangeur (9) pour recevoir du liquide de rinçage, par exemple de l'huile de rinçage, à partir de la boîte de vitesses (1) dans le circuit de rinçage (B) à travers la première conduite (P1) et l'extrémité amont (18) ;
la liaison, par une seconde conduite (P2), d'une extrémité aval (19) du circuit de rinçage (B) au circuit de refroidissement (A) à un emplacement de liaison aval (20) en amont de l'échangeur de chaleur (9) ;
le pompage de liquide de rinçage, par exemple de l'huile de rinçage ou de l'huile d'engrenage, à partir de la boîte de vitesses (1) à travers la première conduite (P1), l'extrémité amont (18) et le filtre de rinçage (14), passant l'alimentation en air (16, 17) et à travers l'échangeur de chaleur (9), l'extrémité aval et la seconde conduite (P2), et l'ajout d'air à partir de l'alimentation en air (16, 17) au liquide de rinçage dans le circuit de rinçage (B) tandis que le liquide de rinçage passe dans l'alimentation en air (16, 17) ;
tandis que la soupape de libération de pression (11) est fermée, la montée en pression jusqu'à un niveau prédéterminé dans le circuit de rinçage (B) et dans le circuit de refroidissement (A) et, en atteignant cette limite de pression prédéterminée, l'ouverture de la soupape de libération de pression (11) en aval de l'échangeur de chaleur (9) et l'entraînement d'un écoulement turbulent dans le circuit de refroidissement (A) pendant une libération forcée de pression à partir du circuit de refroidissement (A) à travers la soupape de libération de pression (11).

2. Procédé selon la revendication 1, dans lequel le procédé comprend la libération forcée de la pression à partir du circuit de refroidissement (A) à travers la soupape de libération de pression (11) dans la boîte de vitesses (1).

3. Procédé selon la revendication 2, dans lequel le procédé comprend la libération forcée de la pression du circuit de refroidissement (A) à travers la soupape de libération de pression (11) sous forme d'un jet de liquide de rinçage et le rinçage de l'intérieur de la boîte de vitesses (1) en faisant varier la direction du jet vers différentes parties intérieures de la boîte de vitesses (1).

4. Procédé selon une quelconque revendication précédente, dans lequel le procédé comprend le fonctionnement cyclique de la soupape de libération de pression (11) une pluralité de fois pour faire monter la pression de manière répétée jusqu'à la limite de pression prédéterminée et pour libérer la pression avec force.

5. Procédé selon une quelconque revendication précédente, dans lequel le procédé comprend la fourniture de l'emplacement de liaison aval (20) entre la pompe à huile d'engrenage (4) et l'échangeur de chaleur (9).

6. Procédé selon une quelconque revendication précédente, dans lequel le circuit de refroidissement (A) comprend une unité de filtre (7) destinée à la filtration d'huile d'engrenage pendant le fonctionnement standard de l'éolienne lors de la production d'électricité ; dans lequel le procédé comprend l'élimination de milieu filtrant à partir de l'unité de filtre (7) avant la montée de la pression dans le circuit de refroidissement (A) pour fournir un écoulement régulier à travers l'unité de filtre (7) pendant la libération forcée.

7. Procédé selon la revendication 6, dans lequel l'emplacement de liaison aval (20) est entre la pompe à huile d'engrenage (4) et l'unité de filtre (7).

8. Procédé selon une quelconque revendication précédente, dans lequel le circuit de rinçage (B) comprend une pompe de rinçage (12) différente de la pompe à huile d'engrenage (4), pour pomper le liquide de rinçage à travers le circuit de rinçage (B) et au moins une partie du circuit de refroidissement et à travers la soupape de libération de pression (11).

9. Procédé selon la revendication 8, dans lequel l'emplacement de liaison aval (20) est en amont de l'échangeur de chaleur (9) entre la pompe à huile d'engrenage (4) et l'échangeur de chaleur (9) pour contourner la pompe à huile d'engrenage (4) par le circuit de rinçage (B) mais pas par l'échangeur de chaleur (9).

10. Procédé selon une quelconque revendication précédente, dans lequel le procédé comprend la sélection de la limite de pression prédéterminée dans la plage de 3 à 10 bars.

11. Procédé selon une quelconque revendication précédente, dans lequel le liquide de rinçage est une huile de viscosité inférieure à celle de l'huile d'engrenage et configurée pour une turbulence pendant la libération forcée de la pression à travers la soupape de libération de pression 11.

12. Système de rinçage pour rincer un circuit de refroidissement (A) pour de l'huile d'engrenage d'une boîte de vitesses (1) dans une éolienne, le système comprenant
- un collecteur de rinçage de régulation de pression (10) destiné à être inséré dans le circuit de refroidissement entre la boîte de vitesses (1) et un échangeur de chaleur (9) d'un circuit de refroidissement d'huile d'engrenage (A) ;
- une soupape de libération de pression (11) reliée par conduite au collecteur de rinçage de régulation de pression (10) pour recevoir du liquide de rinçage, par exemple de l'huile de rinçage, à partir de celle-ci et configurée pour se fermer pour un écoulement de liquide de rinçage à partir du collecteur (10) et pour s'ouvrir pour un écoulement de liquide de rinçage lorsque la pression s'élève au-dessus d'une limite de pression prédéterminée ;
- une soupape de sécurité (21) pour libérer le liquide de rinçage à partir du collecteur (10) d'une manière automatique lorsque la pression du liquide de rinçage dans le collecteur (10) atteint une limite de pression de sécurité, dans lequel la limite de pression de sécurité est supérieure ou égale à la limite de pression prédéterminée ;
- un circuit de rinçage (B) différent du circuit de refroidissement (A), le circuit de rinçage (B) comprenant une extrémité amont (18) et une extrémité aval (19) avec un collecteur de liaison de rinçage (6) pour une liaison au circuit de refroidissement (A) en amont de l'échangeur de chaleur (9) et, entre l'extrémité aval et l'extrémité amont, une pompe de rinçage (12), un filtre de rinçage (14) et une alimentation en air (16, 17) agencés en série, l'alimentation en air (16, 17) étant fournie en aval de la pompe de rinçage (12) pour ajouter de l'air au liquide de rinçage ;
dans lequel le système est configuré pour recevoir du liquide de rinçage, par exemple de l'huile de rinçage, à travers l'extrémité amont (18) en amont de l'échangeur de chaleur (9) et dans le circuit de rinçage (B) et pour pomper le liquide de rinçage par la pompe de rinçage (12) à travers le filtre de rinçage (14) et passant l'alimentation en air (16, 17), pour ajouter de l'air au liquide de rinçage et pour pomper le liquide de rinçage aéré plus loin à travers l'extrémité aval et le collecteur de liaison de rinçage (6) dans le circuit de refroidissement (A) en amont de l'échangeur de chaleur (9) dans le cadre de la procédure de rinçage ;
dans lequel le système est en outre configuré pour faire monter la pression à un niveau de pression prédéterminé dans le circuit de rinçage (B) et le circuit de refroidissement (A), lorsqu'il est relié, tandis que la soupape de libération de pression (11) est fermée, et dans lequel le système est configuré pour une libération forcée de pression à travers la soupape de libération de pression (11) lors de l'atteinte de cette limite de pression prédéterminée au niveau de la soupape de libération de pression en ouvrant la soupape de libération de pression (11) en aval de l'échangeur de chaleur (9) et pour entraîner un écoulement turbulent dans le circuit de refroidissement (A) pendant la libération forcée.
